# FASCICULE DE BREVET EUROPEEN

(11) **EP 2 375 504 B1**
(45) Date de publication et mention de la délivrance du brevet: **31.10.2012**
(21) Numéro de dépôt: 11158602.0
(22) Date de dépôt: 17.03.2011
(51) Int. Cl.: H01R 4/68, H02G 15/34, H01R 4/56

(54) **Dispositif de connexion de deux câbles supraconducteurs**
Verbindungsvorrichtung von zwei Supraleitungskabeln
Device for connecting two superconducting cables

(30) Priorité: 07.04.2010 FR 1052606
(43) Date de publication de la demande: 12.10.2011
(73) Titulaire: Nexans, 75008 Paris (FR)
(72) Inventeur: Lallouet, Nicolas, 62132, FIENNES (FR); Delplace, Sébastien, 59279, LOON-PLAGE (FR)
(74) Mandataire: Gauer, Pierre

(56) Documents cités:
- EP-A1- 1 489 691
- EP-A1- 2 105 994
- JP-A- 63 254 683
- US-A1- 2008 176 461

## Description

La présente invention concerne un dispositif de connexion de deux câbles supraconducteurs. L'invention s'applique tout particulièrement aux jonctions de câbles supraconducteurs haute tension.

Un câble supraconducteur comprend typiquement un support central, généralement de forme cylindrique, autour duquel est enroulé un matériau supraconducteur. Une gaine isolante est placée autour du matériau supraconducteur. Le support central est constitué d'un matériau électriquement conducteur, par exemple un câble ou un tube en cuivre. Le matériau supraconducteur peut se présenter sous la forme d'un ruban enroulé autour du support central en une ou plusieurs couches.

Le document EP 2 105 994 décrit en particulier un dispositif de connexion de deux câbles supraconducteurs comprenant un manchon conducteur emboîté autour de la partie dénudée de chacun des câbles. Le manchon comporte des gorges destinées à accueillir des lamelles métalliques de contact. Le dispositif comprend en outre un tube conducteur contenant lesdits manchons et connecté à ceux-ci.

Du fait de l'utilisation des manchons et du tube conducteur, ce dispositif présente une longueur et un diamètre important, ce qui le rend particulièrement volumineux. Ce dispositif implique également une résistance électrique non négligeable entre les deux extrémités de câbles supraconducteurs. En outre, il nécessite un montage complexe.

Le document EP 1 489 691 décrit un dispositif de connexion de deux câbles supraconducteurs comprenant un manchon conducteur serti sur le support central du dispositif. Ce dispositif ne permet toutefois pas d'éviter les concentrations locales de champ électrique ni l'échauffement du dispositif lié à l'effet Joule.

L'invention vise à remédier à ces inconvénients.

En particulier, l'invention propose un dispositif de connexion de deux câbles supraconducteurs adapté à une connexion par brasage, qui est compact et facile à assembler et qui permet d'éviter les concentrations locales de champ électrique ainsi que l'échauffement du dispositif par effet Joule.

L'invention a ainsi pour objet un dispositif de connexion de deux câbles supraconducteurs comprenant chacun un support central conducteur, au moins une couche de matériau supraconducteur disposée autour du support central, et une gaine isolante entourant la couche de matériau supraconducteur, l'extrémité de chaque câble étant dénudée pour rendre apparente une portion de ladite couche de matériau supraconducteur.

Conformément à l'invention :
a) les portions apparentes des couches de matériau supraconducteur se faisant face sont connectées à l'aide d'au moins une couche de matériau supraconducteur, et
b) le dispositif comprend une unique enveloppe conductrice entourant les portions apparentes des couches de matériau supraconducteur, l'enveloppe conductrice étant disposée à chacune de ses extrémités sur une zone reliée électriquement à une couche de matériau supraconducteur, l'enveloppe étant en outre reliée électriquement aux supports centraux et au matériau supraconducteur des deux câbles supraconducteurs à l'aide d'un matériau de brasage, l'enveloppe conductrice présentant une surface externe lisse, convexe et dépourvue d'angle, l'enveloppe conductrice comprenant une ouverture destinée à l'introduction du matériau de brasage à l'intérieur de l'enveloppe.

La connexion entre elles des couches de matériau supraconducteur se faisant face permet d'obtenir une continuité du point de vue supraconducteur ce qui a pour effet de limiter l'échauffement du dispositif lié à l'effet Joule. Le sertissage de l'enveloppe décrite dans le document EP 1 489 691 empêche de réaliser cette continuité.

L'enveloppe métallique autour du matériau supraconducteur permet d'accueillir le matériau de brasage et d'assurer une connexion électrique et mécanique. La forme spécifique de l'enveloppe, qui présente une surface externe lisse, convexe et dépourvue d'angle, permet de limiter le champ électrique au niveau de la connexion en évitant les effets de pointe qui sont des concentrations locales importantes de champ électrique. Les angles de l'enveloppe du dispositif du document EP 1 489 691 conduisent au contraire à des concentrations de champ électrique.

L'emploi d'une enveloppe unique permet en outre d'obtenir un dispositif compact et facile à monter.

L'alliage de brasage fusionné et introduit dans l'enveloppe permet d'assurer une parfaite continuité électrique entre les deux extrémités supraconductrices des câbles mais également entre leurs supports centraux, ce qui assure un bon comportement de la connexion en cas de court-circuit, puisque le courant ne circule alors que dans les parties résistives.

Pour faciliter la connexion des supports centraux, les supports centraux des deux câbles peuvent être reliés entre eux à l'aide d'un élément cylindrique conducteur vissé à l'intérieur des supports centraux. L'élément cylindrique conducteur permet une connexion mécanique et électrique des supports centraux. Il permet d'augmenter la section de passage du courant supraconducteur. Ainsi, l'élément cylindrique conducteur possède, outre son rôle de stabilisateur électrique, un rôle de stabilisateur thermique lorsqu'une grande quantité de courant passe par le câble.

Les supports centraux présentent avantageusement une surface extérieure ondulée, ce qui leur confère de la flexibilité.

L'enveloppe conductrice est de préférence constituée de deux demi-enveloppes, de manière à faciliter son assemblage.

L'enveloppe conductrice est convexe, ce qui permet une forte limitation du champ électrique.

Chaque couche de matériau supraconducteur peut comprendre un ou plusieurs rubans de matériau supraconducteur.

L'enveloppe conductrice peut être reliée à chaque couche de matériau supraconducteur via une portion apparente d'une couche de matériau semi-conducteur disposée entre la couche de matériau supraconducteur et la gaine isolante.

La couche de matériau semi-conducteur peut comprendre du papier à noir de charbon.

L'enveloppe conductrice peut être recouverte d'un matériau semi-conducteur.

Le matériau de brasage est en contact avec les supports centraux conducteurs et les couches de matériau supraconducteur, de manière à limiter les risques de claquage électrique.

Le dispositif peut comprendre une couche de matériau isolant disposée autour de l'enveloppe conductrice et des gaines isolantes afin d'assurer la continuité d'isolation électrique entre les deux câbles.

D'autres caractéristiques et avantages de la présente invention apparaîtront plus clairement à la lecture de la description suivante donnée à titre d'exemple illustratif et non limitatif et faite en référence aux dessins annexés sur lesquels :

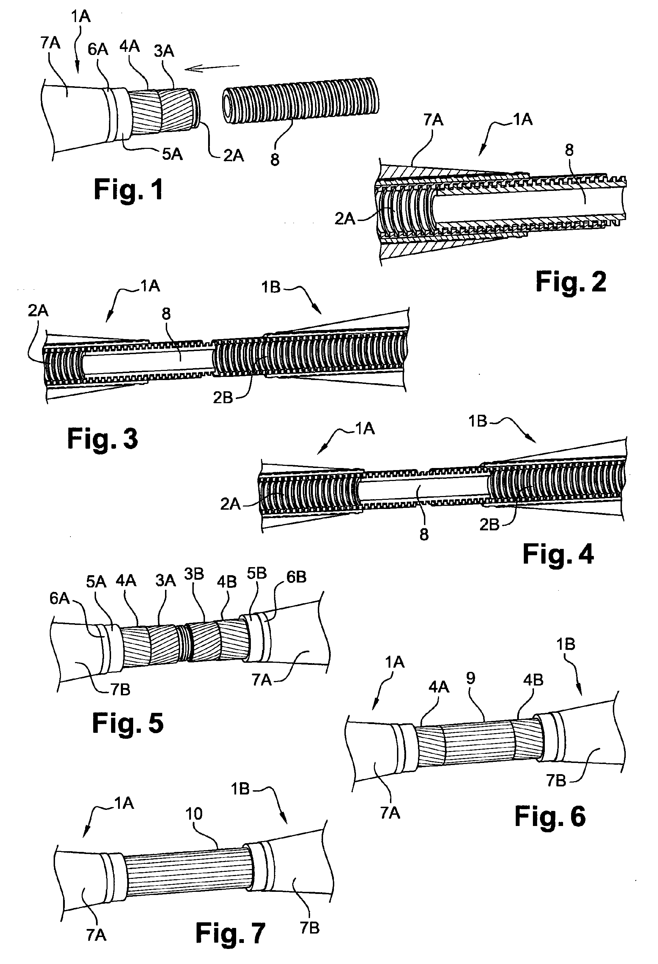

- les figures 1 à 13 illustrent différentes étapes de préparation d'un dispositif de connexion selon l'invention.

Tel qu'illustré à la figure 1, un câble supraconducteur 1A est muni d'une extrémité comprenant un support central 2A résistif et électriquement conducteur, de forme sensiblement cylindrique. Le support central 2A peut être un câble de fils de cuivre ou, tel que représenté, un tube métallique de surface ondulée et creux, de manière à faire passer de l'azote liquide dans le coeur du câble, à surface ondulée, par exemple en cuivre, en acier inoxydable ou en cuivre argenté.

Deux couches superposées 3A,4A d'un matériau supraconducteur, dont une couche interne 3A et une couche externe 4A, entourent le support central 2A. L'extrémité du câble 1A peut également comprendre un ruban de renforcement 5A, par exemple en acier inoxydable, ainsi qu'une couche 6A de matériau semi-conducteur, formée par exemple de rubans en papier à noir de charbon, disposée sur la couche supraconductrice externe 4A. Une gaine électriquement isolante 7A, constituée par exemple d'un enroulement de rubans de papier, entoure le ruban semi-conducteur 6A. L'extrémité de la gaine électriquement isolante 7A est formée de façon conique à son extrémité.

Les couches supraconductrices 3A,4A peuvent être formées par des rubans, tel que représenté, ou par des fils en matériau supraconducteur, enroulés autour du support central 2A. Le câble 1A peut ne comporter qu'une seule couche supraconductrice 3A ou 4A. Les fils ou rubans supraconducteurs peuvent être par exemple du type BSCCO (Bi₂Sr₂Ca₂CU₃Oₓ) ou du type YBaCuO.

L'extrémité du câble 1A est dénudée en marches d'escaliers de façon à faire apparaître successivement, en partant de la gauche du câble vers son extrémité et sur une longueur qui peut être variable, la gaine isolante 7A, la couche de matériau semi-conducteur 6A, le ruban de renforcement 5A, la couche supraconductrice externe 4A, la couche supraconductrice interne 3A, puis le support central 2A.

Un élément cylindrique creux 8, par exemple en cuivre et de forme ondulée, est vissé à l'intérieur du support central 2A du câble 1A, tel qu'illustré à la figure 2, qui est une vue en section longitudinale de l'extrémité du câble 1.

Le câble 1A est relié à un deuxième câble 1B identique au câble 1A à l'aide de l'élément cylindrique creux 8 qui est à son tour vissé à l'intérieur d'un support central 2B du deuxième câble 1B (figures 3 et 4). L'assemblage mécanique des deux câbles 1A,1B pourrait également être effectué par soudage, brasage, bridage ou sertissage.

L'assemblage illustré à la figure 5 comprend pour chaque câble 1A,1B deux couches 3A,4A ;3B,4B de matériau supraconducteur disposées autour des supports centraux 2A,2B. Ces couches 3A,4A ;3B,4B de matériau supraconducteur se font face mais ne sont pas connectées. On réalise alors la connexion des couches supraconductrices internes 3A,3B à l'aide d'une couche 9 de rubans de matériau supraconducteur (figure 6), puis la connexion des couches supraconductrices externes 4A,4B à l'aide d'une couche 10 de rubans de matériau supraconducteur (figure 7).

L'assemblage illustré à la figure 7 a pour inconvénient que les rubans de matériau supraconducteur peuvent présenter des arêtes vives pouvant créer des effets de pointe au niveau du champ électrique et risquant d'entraîner des claquages. En outre, la continuité électrique des supports centraux avec la couche externe 10 de matériau supraconducteur risque de ne pas être assurée.

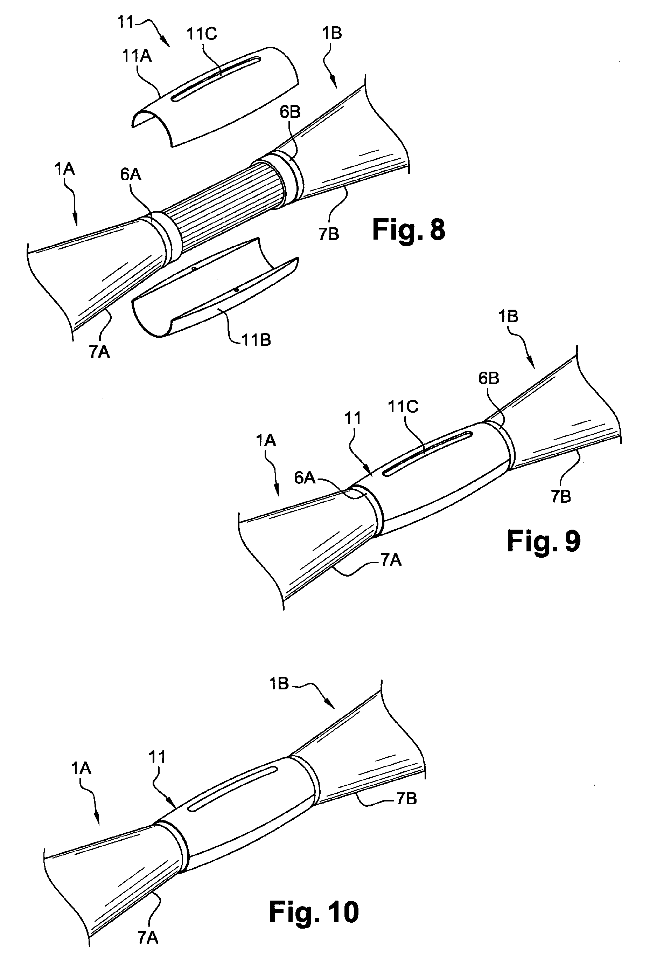

On utilise alors une enveloppe 11 métallique, par exemple en cuivre, formée de deux demi-coquilles 11A et 11B, et comprenant une fente 11C (figure 8). Les deux extrémités de l'enveloppe 11 sont disposées sur les extrémités apparentes des couches 6A,6B de papier à noir de charbon (figure 9). L'enveloppe 11, en configuration opérationnelle du dispositif, forme ainsi une surface continue munie de l'ouverture 11C, cette surface reliant les portions non dénudées des gaines isolantes 7A,7B et entourant complètement les portions apparentes de matériau supraconducteur des deux câbles 1A,1B.

L'enveloppe 11 est en contact électrique avec les couches de matériau supraconducteur via les couches 6A,6B des couches de papier à noir de charbon. L'enveloppe 11 est ainsi également en contact avec les supports centraux 2A,2B via les couches de matériau supraconducteur. L'enveloppe 11 est ainsi au même potentiel que les supports centraux 2A,2B. L'enveloppe 11 présente une surface externe lisse. On évite ainsi la présence de pointes à la surface, ce qui nécessiterait une électrode supplémentaire pour masquer ces pointes. La surface externe est avantageusement étudiée pour présenter un champ électrique aussi faible que possible. La surface externe est ainsi convexe, de préférence en forme d'ogive, dépourvue d'angle et avec un diamètre extérieur de préférence aussi faible que possible.

Un matériau de brasage sous forme liquide, porté à une température supérieure à sa température de fusion, est ensuite versé dans la fente 11C de l'enveloppe 11. Le brasage désigne un procédé consistant à assembler des pièces métalliques par l'apport d'un alliage dont la température de fusion est inférieure à celles des surfaces à souder. Ce matériau est électriquement conducteur et possède avantageusement un point de fusion bas, par exemple inférieur à 100°C. Le matériau peut être par exemple un alliage SnBiPb. On évite ainsi d'endommager les couches supraconductrices par un chauffage à température trop élevée, tout en permettant une bonne liaison électrique entre les couches supraconductrices, les supports centraux et l'enveloppe 11 (figure 10).

Le matériau de brasage permet d'améliorer la connexion électrique des rubans supraconducteurs. Il va également s'écouler sous les rubans jusqu'aux supports centraux du dispositif, assurant ainsi la continuité électrique des supports centraux. Enfin, le matériau de brasage permet d'obtenir une meilleure cohésion mécanique du dispositif car il augmente sa rigidité.

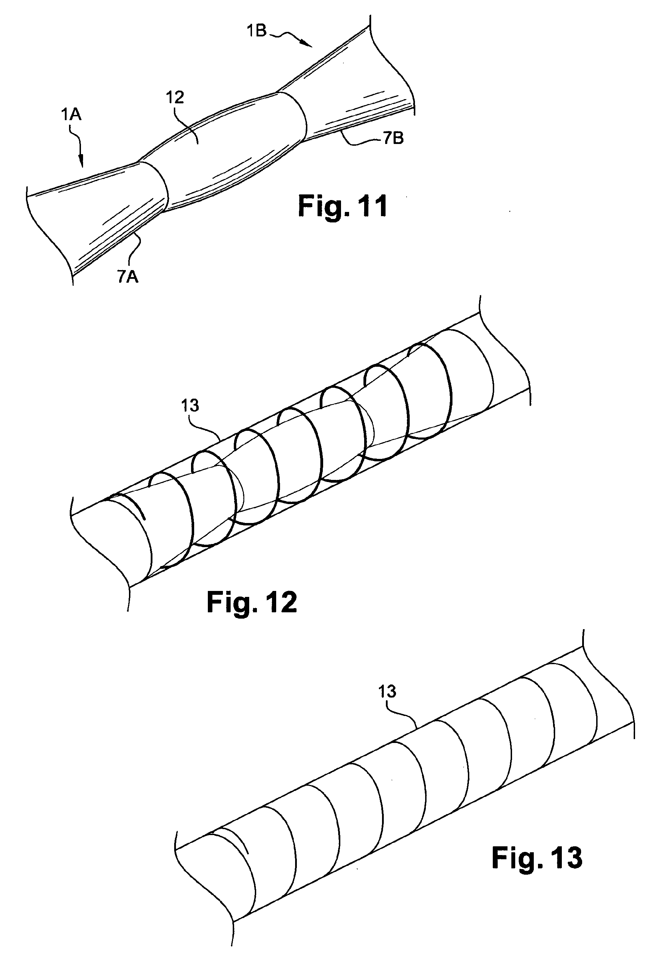

On dispose de préférence sur l'enveloppe 11 remplie de matériau de brasage une couche 12 de matériau semi-conducteur, comme du papier à noir de charbon, pour obtenir une surface parfaitement lisse, tel qu'illustré à la figure 11. Enfin, l'isolant du câble est reconstitué en recouvrant l'ensemble par une couche 13 de papier isolant de manière à constituer un cylindre externe de matériau isolant (figures 12 et 13).

Le dispositif de connexion selon l'invention permet ainsi de connecter facilement et de manière compacte des câbles supraconducteurs haute tension. L'enveloppe du dispositif permet de servir d'électrode pour la gestion du champ électrique et peut également servir de court-circuit en cas de courant de défaut.

## Revendications

1. Dispositif de connexion de deux câbles supraconducteurs (1A,1B) comprenant chacun un support central (2A,2B) conducteur, au moins une couche (3A,4A ;3B,4B) de matériau supraconducteur disposée autour du support central (2A,2B), et une gaine isolante (7A,7B) entourant la couche (3A,4A ;3B,4B) de matériau supraconducteur, l'extrémité de chaque câble étant dénudée pour rendre apparente une portion de chaque couche (3A,4A ;3B,4B) de matériau supraconducteur, **caractérisé en ce que** :
a) Les portions apparentes des couches (3A,4A ;3B,4B) de matériau supraconducteur se faisant face sont connectées à l'aide d'au moins une couche (9,10) de matériau supraconducteur, et
b) le dispositif comprend une unique enveloppe conductrice (11) entourant les portions apparentes des couches (3A,4A ;3B,4B) de matériau supraconducteur, l'enveloppe conductrice (11) étant disposée à chacune de ses extrémités sur une zone (6A,6B) reliée électriquement à une couche (4A,4B) de matériau supraconducteur, l'enveloppe (11) étant en outre reliée électriquement aux supports centraux (2A,2B) et au matériau supraconducteur des deux câbles supraconducteurs (1A,1B) à l'aide d'un matériau de brasage, l'enveloppe conductrice (11) présentant une surface externe lisse, convexe et dépourvue d'angle, l'enveloppe conductrice (11) comprenant une ouverture (11C) destinée à l'introduction du matériau de brasage à l'intérieur de l'enveloppe (11).

2. Dispositif selon la revendication 1, **caractérisé en ce que** les supports centraux (2A,2B) des deux câbles (1A,1B) sont reliés entre eux à l'aide d'un élément cylindrique (8) conducteur vissé à l'intérieur des supports centraux (2A,2B).

3. Dispositif selon la revendication 1 ou 2, caractérisé en ce les supports centraux (2A,2B) présentent une surface extérieure ondulée.

4. Dispositif selon l'une des revendications 1 à 3, **caractérisé en ce que** l'enveloppe conductrice (11) est constituée de deux demi-enveloppes (11A,11B).

5. Dispositif selon l'une des revendications 1 à 4, **caractérisé en ce que** chaque couche (3A,4A ;3B,4B) de matériau supraconducteur comprend un ou plusieurs rubans de matériau supraconducteur.

6. Dispositif selon l'une des revendications 1 à 5, **caractérisé en ce que** l'enveloppe conductrice (11) est reliée à chaque couche (3A,4A ;3B,4B) de matériau supraconducteur via une portion apparente d'une couche (6A,6B) de matériau semi-conducteur disposée entre la couche de matériau supraconducteur (3A,4A ;3B,4B) et la gaine isolante (7A,7B).

7. Dispositif selon la revendication 6, **caractérisé en ce que** la couche (6A,6B) de matériau semi-conducteur comprend du papier à noir de charbon.

8. Dispositif selon l'une des revendications 1 à 7, **caractérisé en ce que** l'enveloppe conductrice (11) est recouverte d'un matériau semi-conducteur (12).

9. Dispositif selon l'une des revendications 1 à 8, **caractérisé en ce que** le dispositif comprend une couche (13) de matériau isolant disposée autour de l'enveloppe conductrice (11) et des gaines isolantes (7A,7B).

## Claims

1. A device for connecting two superconducting cables (1A, 1B), each comprising a central conducting support (2A, 2B), at least one layer (3A, 4A; 3B, 4B) of superconducting material arranged around the central support (2A, 2B), and an insulating sheath (7A, 7B) surrounding the superconducting material layer (3A, 4A; 3B, 4B), the end of each cable being stripped so as to expose a portion of each superconducting material layer (3A, 4A; 3B, 4B), **characterized in that**:
a) the apparent portions of the superconducting material layers (3A, 4A; 3B, 4B) facing each other, are connected by means of at least one superconducting material layer (9, 10), and
b) the device comprises a single conducting case (11) surrounding the apparent portions of the superconducting material layers (3A, 4A; 3B, 4B), the conducting case (11) being arranged at each of its ends on an area (6A, 6B) electrically connected to a superconducting material layer (4A, 4B), the case (11) being further electrically connected to the central supports (2A, 2B) and to the superconducting material of both superconducting cables (1A, 1B) by means of a brazing material, the conducting case (11) having a smooth convex external surface without any angle, the conducting case (11) comprising an aperture (11C) intended for introducing the brazing material inside the case (11).

2. The device according to claim 1, **characterized in that** the central supports (2A, 2B) of both cables (1A, 1B) are connected to each other by means of a cylindrical conducting element (8) screwed inside the central supports (2A, 2B).

3. The device according to claim 1 or 2, **characterized in that** the central supports (2A, 2B) have a corrugated outer surface.

4. The device according to one of claims 1 to 3, **characterized in that** the conducting case (11) consists of two half cases (11A, 11B).

5. The device according to one of claims 1 to 4, **characterized in that** each superconducting material layer (3A, 4A; 3B, 4B) comprises one or several superconducting material ribbons.

6. The device according to one of claims 1 to 5, **characterized in that** the conducting case (11) is connected to each superconducting material layer (3A, 4A; 3B, 4B) via an apparent portion of a superconducting material layer (6A, 6B), arranged between the superconducting material layer (3A, 4A; 3B, 4B) and the insulating sheath (7A, 7B).

7. The device according to claim 6, **characterized in that** the superconducting material layer (6A, 6B) comprises carbon black paper.

8. The device according to one of claims 1 to 7, **characterized in that** the conducting case (11) is covered with a semiconducting material (12).

9. The device according to one of claims 1 to 8, **characterized in that** the device comprises a layer (13) of insulating material arranged around the conducting case (11) and the insulating sheaths (7A, 7B).

## Patentansprüche

1. Verbindungsvorrichtung von zwei supraleitenden Kabeln (1A, 1B), die jeweils eine leitende zentrale Stütze (2A, 2B), mindestens eine supraleitende Materialschicht (3A, 4A; 3B, 4B), die um die zentrale Stütze (2A, 2B) angeordnet ist, und eine Isolierhülle (7A, 7B), die die supraleitende Materialschicht (3A, 4A; 3B, 4B) umgibt, umfassen, wobei das Ende jedes Kabels abisoliert ist, um einen Abschnitt jeder supraleitenden Materialschicht (3A, 4A; 3B, 4B) sichtbar zu machen, **dadurch gekennzeichnet, dass**:
a) die sichtbare Abschnitte der supraleitenden Materialschichten (3A, 4A; 3B, 4B), die sich gegenüberstehen, mit Hilfe von mindestens einer supraleitenden Materialschicht (9, 10) verbunden sind, und
b) die Vorrichtung einen einzigen leitenden Mantel (11) umfasst, der die sichtbaren Abschnitte der supraleitenden Materialschichten (3A, 4A; 3B, 4B) umgibt, wobei der leitende Mantel (11) an jedem ihrer Enden in einer Zone (6A, 6B) angeordnet ist, die mit einer supraleitendes Materialschicht (4A, 4B) elektrisch verbunden ist, wobei der Mantel (11) ferner mit den zentralen Stützen (2A, 2B) und dem supraleitenden Material der zwei supraleitenden Kabel (1A, 1B) mit Hilfe eines Lötmaterials elektrisch verbunden ist, wobei der leitende Mantel (11) eine glatte, konvexe Außenfläche ohne Kante aufweist, wobei der leitende Mantel (11) eine Öffnung (11C) umfasst, die zum Einführen des Lötmaterials in den Mantel (11) bestimmt ist.

2. Vorrichtung nach Anspruch 1, **dadurch gekennzeichnet, dass** die zentralen Stützen (2A, 2B) der zwei Kabel (1A, 1B) untereinander mit Hilfe eines leitenden zylindrischen Elements (8) verbunden sind, das in die zentralen Stützen (2A, 2B) geschraubt ist.

3. Vorrichtung nach Anspruch 1 oder 2, **dadurch gekennzeichnet, dass** die zentralen Stützen (2A, 2B) eine wellige Außenfläche aufweisen.

4. Vorrichtung nach einem der Ansprüche 1 bis 3, **dadurch gekennzeichnet, dass** der leitende Mantel (11) aus zwei Halbmänteln (11A, 11B) besteht.

5. Vorrichtung nach einem der Ansprüche 1 bis 4, **dadurch gekennzeichnet, dass** jede supraleitende Materialschicht (3A, 4A; 3B, 4B) ein oder mehrere supraleitende Materialbänder umfasst.

6. Vorrichtung nach einem der Ansprüche 1 bis 5, **dadurch gekennzeichnet, dass** der leitende Mantel (11) mit jeder supraleitenden Materialschicht (3A, 4A; 3B, 4B) über einen sichtbaren Abschnitt einer Halbleiter-Materialschicht (6A, 6B) verbunden ist, die zwischen der supraleitenden Materialschicht (3A, 4A; 3B, 4B) und der Isolierhülle (7A, 7B) angeordnet ist.

7. Vorrichtung nach Anspruch 6, **dadurch gekennzeichnet, dass** die Halbleiter-Materialschicht (6A, 6B) Kohlepapier umfasst.

8. Vorrichtung nach einem der Ansprüche 1 bis 7, **dadurch gekennzeichnet, dass** der leitende Mantel (11) mit einem halbleitenden Material (12) bedeckt ist.

9. Vorrichtung nach einem der Ansprüche 1 bis 8, **dadurch gekennzeichnet, dass** die Vorrichtung eine isolierende Materialschicht (13) umfasst, die um den leitenden Mantel (11) und die Isolierhüllen (7A, 7B) angeordnet sind.
